# EUROPÄISCHE PATENTSCHRIFT

(11) **EP 1 991 100 B1**
(45) Veröffentlichungstag und Bekanntmachung des Hinweises auf die Patenterteilung: **22.11.2017**
(21) Anmeldenummer: 07704681.1
(22) Anmeldetag: 21.02.2007
(51) Int. Cl.: A47L 9/12

(54) **FILTER FÜR EINEN STAUBSAUGER**
FILTER FOR A VACUUM CLEANER
FILTRE POUR ASPIRATEUR

(30) Priorität: 28.02.2006 DE 102006009257
(43) Veröffentlichungstag der Anmeldung: 19.11.2008
(73) Patentinhaber: BSH Hausgeräte GmbH, 81739 München (DE)
(72) Erfinder: HAMM, Silvio, 98617 Sülzfeld (DE); KLEINHENZ, Albert, 97659 Schönau (DE); SCHELER, Christian, 96528 Rauenstein (DE); SEITH, Thomas, 97616 Bad Neustadt (DE)
(86) Internationale Anmeldenummer: PCT/EP2007/051668
(87) Internationale Veröffentlichungsnummer: WO 2007/099052

(56) Entgegenhaltungen:
- DE-C1- 4 317 715
- DE-U1- 20 108 544
- US-A- 3 800 512
- US-A- 3 807 146

## Beschreibung

Die vorliegende Erfindung betrifft einen Filter für einen Staubsauger.

Filter für Staubsauger sind beispielsweise aus der DE 43 17715 C1 bekannt. Zur Halterung eines Filtermediums ist das dort offenbarte Filter kassettenförmig ausgebildet, so dass das Filtermedium zwischen einem Grundrahmen und einem Abdeckrahmen, welcher dort als Abdeckgitter bezeichnet wird, fixiert ist. Die lagegenaue Montage der Filtermedien in den Rahmen ist jedoch verhältnismäßig zeitaufwendig - soweit nicht passgenau dichtend eingebracht können Schmutzpartikel ein solches Filter passieren und gefährden so die Funktionstüchtigkeit der Saugeinrichtung des Staubsaugers mitunter nachhaltig.

Zur Vermeidung dieser Problematik sind bereits Filter bekannt (DE 12 01 017 A), deren Grundrahmen unmittelbar an ein Filtermedium angespritzt werden. Da der vorhandene Bauraum im Staubsauger die Auslegung des Filterrahmens vorgibt, können - bedingt durch die Form und Spritzgießprozess - bislang nur Filter mit relativ geringer Oberfläche eingesetzt werden. Mit anderen Worten, die maximale Oberfläche solcher von einem Kunststoffrahmen umspritzter Filter und damit deren Effizienz ist letztlich durch die Abmessungen des Grundrahmens vorgegeben und insoweit begrenzt.

Aus dem deutschen Gebrauchsmuster DE 20108544 U1 ist eine Filterkassette für den Kühlluftstrom einer Turbine in einem Schmutzsauger bekannt. Die Filterkassette besteht aus einem Oberteil, welches mit einem Unterteil über ein Filmscharnier schwenkbar verbunden ist. In geöffneten Zustand wird ein Filtervlies in die Kassette eingelegt und dann Ober- und Unterteil mithilfe eines Rastmittels miteinander verriegelt. Das Patent US 3,800,512 A offenbart ein flexibles Filterelement, das einen thermoplastischen Rahmen und ein als ein Wellengitter ausgebildetes thermoplastisches Filtermedium aufweist, wobei der Rahmen und das Wellengitter in einem Stück als einteiliges Filterelement gegossen sind.

Hiervon ausgehend liegt der vorliegenden Erfindung die Aufgabe zugrunde, in einem vorgegebenen Bauraum ein Filter für einen Staubsauger mit möglichst maximaler Oberfläche bereitzustellen.

Diese Aufgabe wird durch einen Filter für einen Staubsauger mit den Merkmalen gemäß Anspruch 1 gelöst. Vorteilhafte Aus- und Weiterbildungen, welche einzeln oder in Kombination miteinander eingesetzt werden können, sind Gegenstand der abhängigen Ansprüche.

Das erfindungsgemäße Filter für einen Staubsauger zeichnet sich durch einen kassettenartigen Grundrahmen und einem daran angelenkten Abdeckrahmen aus, welche durch eine Scharniereinrichtung miteinander verbunden und an wenigstens ein Filtermedium angespritzt sind.

Durch das Vorsehen einer Scharniereinrichtung können großflächige Filter vorteilhaft in einer zweidimensionalen (abgewickelten) Ebene preiswert umspritzt werden und durch einfaches Klappen um das Scharnier in die bauraumsparende dreidimensionale Kassettenform gebracht werden, ohne das etwa auf eine lagegenaue Montage des Filtermediums geachtet werden müsste.

In einer ersten Ausgestaltung der Erfindung, bei der dem Grundrahmen und dem Abdeckrahmen vorzugsweise je ein Filtermedium zugeordnet ist, ist die Scharniereinrichtung Bestandteil von Grund- und Abdeckrahmen, und bevorzugt als Filmscharnier ausgebildet. Obwohl prinzipiell auch andere Fließhilfen in Betracht kommen, lässt sich ein derartiges Filmscharnier insbesondere im Rahmen eines Spritzgussverfahrens einfach und kostengünstig herstellen. Diesbezüglich wird bevorzugt, die Scharniereinrichtung, den Grund- und den Abdeckrahmen einstückig aus Kunststoff zu fertigen.

In einer alternativen, ggf. auch kumulativen, erfindungsgemäß bevorzugten, Ausgestaltung der Erfindung, bei der dem Grundrahmen und dem Abdeckrahmen genau ein Filtermedium zugeordnet ist, ist die Scharniereinrichtung Bestandteil des Filtermediums, also aus diesem gebildet. Auch diese Ausgestaltung lässt sich im Rahmen eines Spritzgussverfahrens einfach und kostengünstig herstellen.

In jedem Fall ist nur ein Spritzgießwerkzeug zur Herstellung des Grundrahmens, des Abdeckrahmens und der Scharniereinrichtung erforderlich, ein so genanntes Familienwerkzeug.

Als Filtermedium haben sich insbesondere sog. Wirrfaservlies, Electretvlies, Filtergewebe und/oder dergleichen flächige und/oder gewölbte Filtermedium bewährt.

Gemäß einer weiteren bevorzugten Ausgestaltung des erfindungsgemäßen Filters schließlich ist vorgesehen, dass im fertig montierten Zustand zwischen Grundrahmen und Abdeckrahmen ein zusätzliches Filtermedium, insbesondere ein sog. Filterschaum, angeordnet ist, welches die Effizienz des erfindungsgemäßen Filters weiter steigert. Alternativ oder kumulativ zum Filterschaum können wiederum auch ein Wirrfaservlies, ein Electretvlies, ein Filtergewebe und/oder dergleichen flächige und/oder gewölbte Filtermedien vorgesehen sein.

Die Erfindung ermöglicht es, ein großflächiges und damit effizientes Filter für einen Staubsauger mit nur einem Werkzeug einer Spritzmaschine einfach und kostengünstig herzustellen. Weiterhin ergibt sich aufgrund der Scharniereinrichtung eine äußerst einfache Montage, ohne das hierbei auf eine lagegenaue Montage des Filtermediums geachtet werden müsste, womit vorteilhaft die Reklamation defekter Staubsauger aufgrund schlecht montierter und damit undichter Filter praktisch gegen Null geht.

Zusätzliche Einzelheiten und weitere Vorteile der Erfindung werden nachfolgend beispielhaft an Hand einer so genannten Filterkassette und in Verbindung mit der beigefügten Zeichnung beschrieben.

Darin zeigen schematisch:
- Fig. 1: in einer perspektivischen Darstellung ein erstes Ausführungsbeispiel einer geöffneten Filterkassette;
- Fig. 2: in einer perspektivischen Schnitt-Darstellung ein zweites Ausführungsbeispiel einer geöffneten Filterkassette;
- Fig. 3: die Filterkassette nach Fig. 1 bzw. 2 in einer Vorderansicht;
- Fig. 4: die Filterkassette nach Fig. 1 in einer Draufsicht;
- Fig. 5: die Filterkassette nach Fig. 2 während eines Klappvorgangs;
- Fig.6: die Filterkassette nach Fig. 1 bzw. 2 im zusammengeklappten Zustand; und
- Fig. 7: die zusammengeklappte Filterkassette in einer Seitenansicht.

Bei der nachfolgenden Beschreibung der bevorzugten Ausführungsformen der vorliegenden Erfindung bezeichnen gleiche Bezugszeichen gleiche oder vergleichbare Komponenten.

Gemäß der Darstellung in den Figuren weist das Filter 1 ein kassettenartigen Grundrahmen 2 und einem daran angelenkten Abdeckrahmen 3 auf. Der Grundrahmen 2 und der Abdeckrahmen 3 sind durch ein Filmscharnier 4 gelenkig miteinander verbunden.

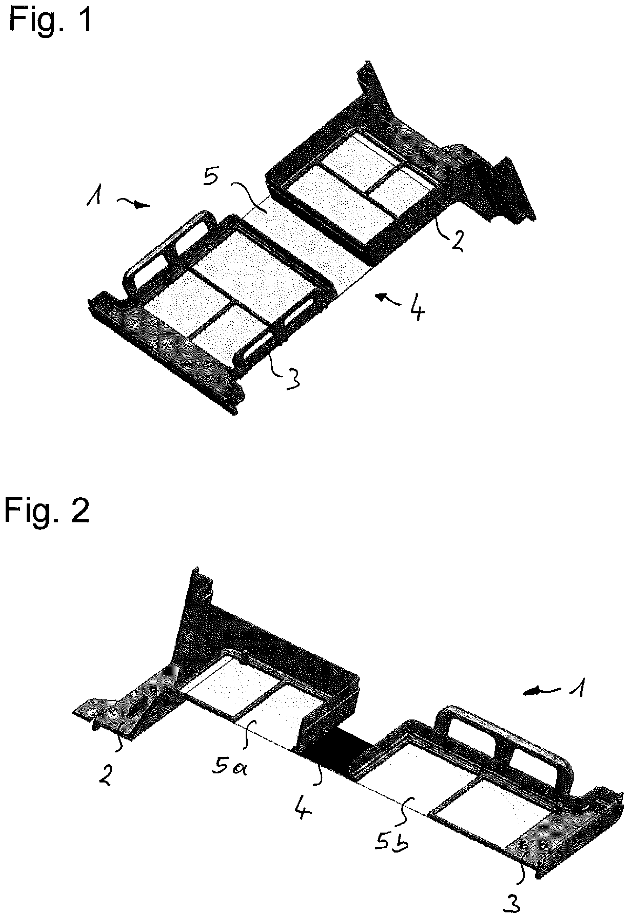

Fig. 1 zeigt eine erste, erfindungsgemäß bevorzugte, Ausgestaltung der Erfindung, bei der dem Grundrahmen 2 und dem Abdeckrahmen 3 ein und dasselbe Filtermedium 5 zugeordnet ist, und wobei die Scharniereinrichtung 4 Bestandteil des Filtermediums 5, also aus diesem gebildet ist. Eine solche Ausgestaltung lässt sich im Rahmen eines Spritzgussverfahrens einfach und kostengünstig herstellen.

Demgegenüber ist in einer zweiten Ausgestaltung der Erfindung, bei der dem Grundrahmen 2 und dem Abdeckrahmen 3 vorzugsweise je ein Filtermedium 5a, 5b zugeordnet sind, die Scharniereinrichtung 4 Bestandteil von Grund- 2 und Abdeckrahmen 3, und bevorzugt als Filmscharnier ausgebildet. Obwohl prinzipiell auch andere Fließhilfen in Betracht kommen, lässt sich - wie schon bei der Ausgestaltung nach Fig. 1 - ein derartiges Filmscharnier 4 insbesondere im Rahmen eines Spritzgussverfahrens einfach und kostengünstig herstellen. Wie in Fig. 2 dargestellt wird diesbezüglich bevorzugt, dass die Scharniereinrichtung 4, der Grund- 2 und der Abdeckrahmen 3 gleichzeitig und einstückig aus Kunststoff gefertigt sind.

Je nach Verfügbarkeit der Ausgangsmaterialien für Grundrahmen 2, Abdeckrahmen 3 und Filtermedium 5 kann kumulativ zu einem aus Kunststoff gefertigten Scharnier 4 zusätzlich auch ein aus Filtermedium gebildetes Scharnier (nicht dargestellt) - analog der Beschreibung zu Fig. 1 - vorgesehen sein.

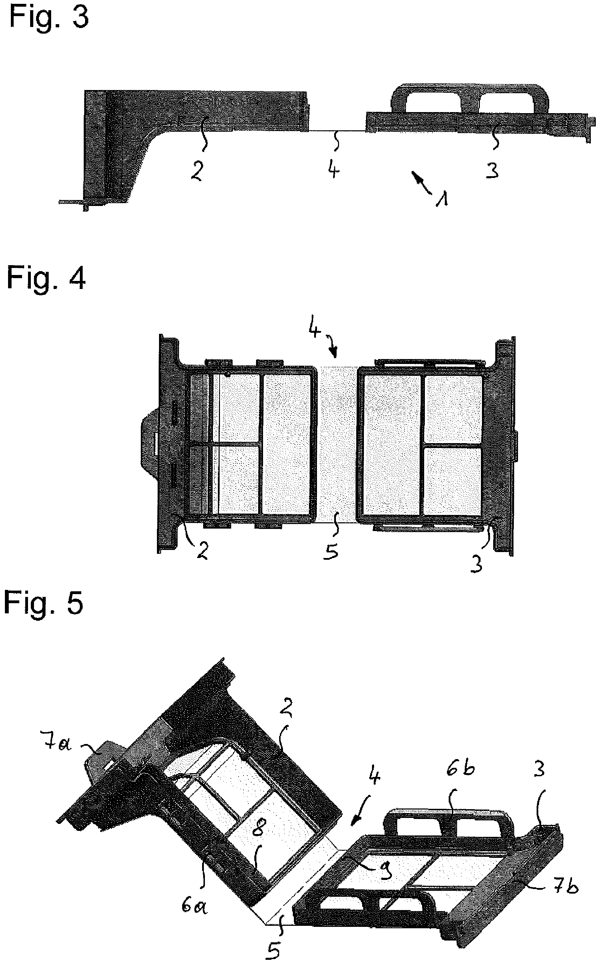

Wie in Fig. 3 in einer Vorderansicht dargestellt, verbindet das Scharnierelement 4 einen Randbereich des kassettenförmigen Grundrahmens 2 mit einem Randbereich des Abdeckrahmens 3.

In Fig. 4 ist in einer Draufsicht nochmals deutlich zu sehen, wie im Fall eines aus dem Filtermedium 5 gebildeten Scharniers 4 die Filterkassette ausgebildet ist.

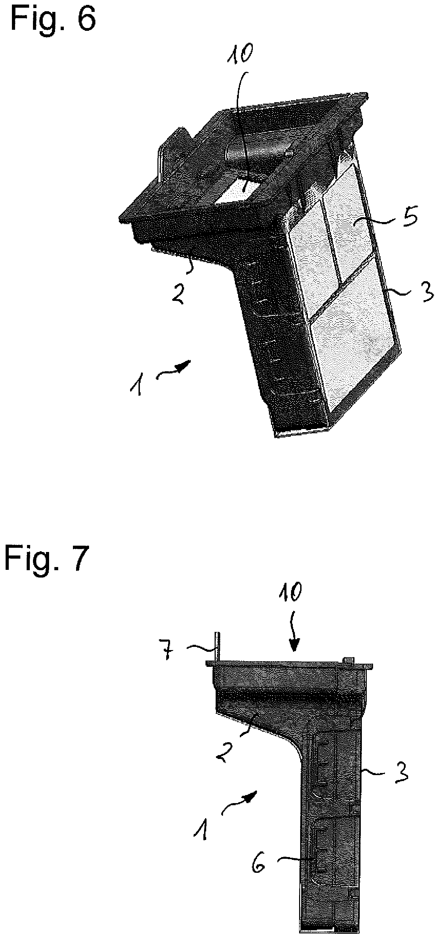

Fig. 5 zeigt die Filterkassette nach Fig. 2 während eines Klappvorgangs; Fig. 6 im zusammengeklappten Zustand. Deutlich erkennbar ist, wie beispielsweise seitlich und stirnseitig an Grund- 2 und Abdeckrahmen 3 angeordnete Rastelemente 6a, 6b, 7a, 7b zueinander korrespondierend ausgebildet sind und im zusammengeklappten Zustand des Filters 1 zusammenwirken. Ebenfalls erkennbar ist, wie die Seitenwände 9 des Abdeckrahmens 3 die Seitenwände 8 des Grundrahmens 2 abschnittsweise deckelartig übergreifen und so die Filterkassette 1 seitlich abdichten. Obgleich nicht dargestellt kann anhand von Fig. 5 und 6 gut nachvollzogen werden, wie zwischen Grundrahmen 2 und Abdeckrahmen 5 im Innenraum 10 der Filterkassette 1 ein zusätzliches Filtermedium, insbesondere ein sog. Filterschaum, angeordnet werden kann.

Fig. 7 schließlich zeigt die zusammengeklappte Filterkassette 1 in einer Seitenansicht.

Die vorliegende Erfindung lässt sich wie folgt zusammenfassen: Um die Filterfläche gegenüber bekannten Filterflächen um bis zu 60 % zu vergrößern ist das erfindungsgemäße Filter 1 nun so gestaltet, das es vorzugsweise im Spritzgießwerkzeug aufgeklappt gefertigt werden kann. Zwecks Bereitstellung für einen Betriebszustand muss es dann lediglich zusammen geklappt, verrastet und in den vorhandenen Bauraum im Staubsauger eingeschoben werden. Das zum Klappen notwendige Scharnier 4 besteht erfindungsgemäß bevorzugt aus dem flexiblen Filtermaterial 5.

Die vorliegende Erfindung ermöglicht es, ein großflächiges und damit effizientes Filter 1 für einen Staubsauger mit nur einem Werkzeug einer Spritzmaschine einfach und kostengünstig herzustellen. Weiterhin ergibt sich aufgrund der Scharniereinrichtung 4 eine äußerst einfache Montage von Grundrahmen 2, Abdeckrahmen 3 und Filtermedium 5, ohne dass hierbei auf eine lagegenaue Montage des Filtermediums 5 geachtet werden müsste, womit vorteilhaft die Reklamation defekter Staubsauger aufgrund undichter Filter 1 praktisch gegen Null geht.

### Bezugszeichenliste

- 1: Filter, Filterkassette
- 2: Grundrahmen
- 3: Abdeckrahmen
- 4: Scharniereinrichtung, Filmscharnier
- 5: einteiliges Filtermedium
- 5a, 5b: zweigeteiltes Filtermedium
- 6a, 6b: seitlich ausgebildete Rastelemente
- 7a, 7b: stirnseitig ausgebildete Rastelemente
- 8: Seitenwand des Grundrahmens 2
- 9: Seitenwand des Abdeckrahmens 3
- 10: Innenraum des Filters, der Filterkassette 1

## Patentansprüche

1. Filter (1) für einen Staubsauger, bestehend aus einem kassettenartigen Grundrahmen (2) und einem Abdeckrahmen (3), welche durch eine Scharniereinrichtung (4) miteinander verbunden sind, **dadurch gekennzeichnet, dass** der Grundrahmen (2) und der Abdeckrahmen (3) an wenigstens ein Filtermedium (5, 5a, 5b) angespritzt sind.

2. Filter (1) nach Anspruch 1, **dadurch gekennzeichnet, dass** dem Grundrahmen (2) und dem Abdeckrahmen (3) je ein Filtermedium (5a, 5b) zugeordnet sind.

3. Filter (1) nach Anspruch 1 oder 2, **dadurch gekennzeichnet, dass** die Scharniereinrichtung (4) Bestandteil von Grund- (2) und Abdeckrahmen (3) ist.

4. Filter (1) nach Anspruch 3, **dadurch gekennzeichnet, dass** die Scharniereinrichtung (4) durch ein Filmscharnier gebildet ist.

5. Filter (1) nach Anspruch 3 oder 4, **dadurch gekennzeichnet, dass** die Scharniereinrichtung (4), der Grund- (2) und der Abdeckrahmen (3) einstückig aus Kunststoff gefertigt sind.

6. Filter (1) nach einem der vorherigen Ansprüche, **dadurch gekennzeichnet, dass** dem Grundrahmen (2) und dem Abdeckrahmen (3) genau ein Filtermedium (5) zugeordnet ist.

7. Filter (1) nach Anspruch 6, **dadurch gekennzeichnet, dass** die Scharniereinrichtung (16) Bestandteil des Filtermediums ist.

8. Filter (1) nach einem der vorherigen Ansprüche, **dadurch gekennzeichnet, dass** das Filter (1) durch ein Spritzgussverfahren hergestellt ist.

9. Filter (1) nach einem der vorherigen Ansprüche, **dadurch gekennzeichnet, dass** das Filtermedium (5, 5a, 5b) ein Wirrfaservlies, ein Electretvlies, ein Filtergewebe und/oder dergleichen flächiges und/oder gewölbtes Filtermedium ist.

10. Filter (1) nach einem der vorherigen Ansprüche, **dadurch gekennzeichnet, dass** im fertig montierten Zustand zwischen Grundrahmen (2) und Abdeckrahmen (3) ein zusätzliches Filtermedium, insbesondere ein sog. Filterschaum, angeordnet ist.

## Claims

1. Filter (1) for a vacuum cleaner, consisting of a cassette-type base frame (2) and a cover frame (3), which are connected to one another by a hinge facility (4), **characterised in that** the base frame (2) and the cover frame (3) are injection-moulded onto at least one filter medium (5, 5a, 5b).

2. Filter (1) according to claim 1, **characterised in that** the base frame (2) and cover frame (3) are each assigned a filter medium (5a, 5b).

3. Filter (1) according to claim 1 or 2, **characterised in that** the hinge facility (4) is part of the base frame (2) and cover frame (3).

4. Filter (1) according to claim 3, **characterised in that** the hinge facility (4) is formed by an integral hinge.

5. Filter (1) according to claim 3 or 4, **characterised in that** the hinge facility (4), the base frame (2) and cover frame (3) are manufactured as a single piece from plastic.

6. Filter (1) according to one of the preceding claims, **characterised in that** the base frame (2) and cover frame (3) are assigned just one filter medium (5).

7. Filter (1) according to claim 6, **characterised in that** the hinge facility (16) is part of the filter medium.

8. Filter (1) according to one of the preceding claims, **characterised in that** the filter (1) is produced by an injection-moulding method.

9. Filter (1) according to one of the preceding claims, **characterised in that** the filter medium (5, 5a, 5b) is a random fibre non-woven fabric, an electret foil, a filter cloth and/or a similar planar and/or curved filter medium.

10. Filter (1) according to one of the preceding claims, **characterised in that** an additional filter medium, in particular what is known as a filter foam, is arranged between the base frame (2) and cover frame (3) in the finally assembled state.

## Revendications

1. Filtre (1) pour aspirateur, constitué par un cadre de base (2) en forme de cassette et un cadre de recouvrement (3) qui sont reliés entre eux par un dispositif de charnière (4), **caractérisé en ce que** le cadre de base (2) et le cadre de recouvrement (3) sont moulés par injection sur au moins un moyen filtrant (5, 5a, 5b).

2. Filtre (1) selon la revendication 1, **caractérisé en ce qu'**il est associé au cadre de base (2) et au cadre de recouvrement (3) respectivement un moyen filtrant (5a, 5b).

3. Filtre (1) selon la revendication 1 ou 2, **caractérisé en ce que** le dispositif de charnière (4) fait partie intégrante des cadres de base (2) et de recouvrement (3).

4. Filtre (1) selon la revendication 3, **caractérisé en ce que** le dispositif de charnière (4) est formé par une charnière pelliculaire.

5. Filtre (1) selon la revendication 3 ou 4, **caractérisé en ce que** le dispositif de charnière (4), le cadre de base (2) et le cadre de recouvrement (3) sont réalisés d'une seule pièce en matière plastique.

6. Filtre (1) selon une des revendications précédentes, **caractérisé en ce qu'**il est associé au cadre de base (2) et au cadre de recouvrement (3) exactement un moyen filtrant (5).

7. Filtre (1) selon la revendication 6, **caractérisé en ce que** le dispositif de charnière (16) fait partie intégrante du moyen filtrant.

8. Filtre (1) selon une des revendications précédentes, **caractérisé en ce que** le filtre (1) est obtenu par un procédé de moulage par injection.

9. Filtre (1) selon une des revendications précédentes, **caractérisé en ce que** le moyen filtrant (5, 5a, 5b) est un non-tissé à fibres embrouillées, un non-tissé à électret, un tissu filtrant et/ou un moyen filtrant similaire plan et/ou bombé.

10. Filtre (1) selon une des revendications précédentes, **caractérisé en ce qu'**à l'état entièrement monté, un moyen filtrant supplémentaire, notamment de type « mousse filtrante », est placé entre le cadre de base (2) et le cadre de recouvrement (3).
